# EUROPEAN PATENT APPLICATION

(11) **EP 2 085 769 A1**
(43) Date of publication of application: **05.08.2009**
(21) Application number: 07828559.0
(22) Date of filing: 27.09.2007
(51) Int. Cl.: G01N 21/78, G01N 21/27, G01N 21/77, G01N 31/00, G01N 31/22

(54) **FORMALDEHYDE DETECTING MATERIAL, FORMALDEHYDE DETECTOR, FORMALDEHYDE DETECTING METHOD AND FORMALDEHYDE DETECTING REAGENT**

(30) Priority: 27.09.2006 JP 2006262299
(71) Applicant: Daikin Industries, Ltd., Osaka-shi, Osaka 530-8323 (JP)
(72) Inventor: ZHOU, Haoshen, Tsukuba-shi, Ibaraki 3058568 (JP); WATANABE, Takashi, Tsukuba-shi, Ibaraki 3058568 (JP); KANG, Yoonmyung, Sakai-shi, Osaka 5918511 (JP); SHIGEMORI, Kazuhisa, Kusatsu-shi, Shiga 5258526 (JP); MURAYAMA, Kyouhei, Sakai-shi, Osaka 5918511 (JP)
(74) Representative: Goddar, Heinz J.
(86) International application number: PCT/JP2007/068813
(87) International publication number: WO 2008/041603

(57) **Abstract**

A formaldehyde detector (10) includes a detection reagent that produces a color by reaction with formaldehyde. The detector (10) further includes a detection element (30) including: a base material (31) constituting an optical waveguide through which light propagates while repeating total reflection; and a mesoporous layer (32) that is formed on at least part of a light-reflecting surface constituting a surface of the base material (31) and carries the detection reagent. The detector (10) further includes: a light emitter for emitting light to the base material (31); and a light receiver for receiving light emitted from the base material (31). In addition, the detector (10) includes a signal processing part. The signal processing part receives an optical signal from the light receiver, detects a change in optical property due to color production resulting from a reaction between formaldehyde and the detection reagent, and based on the change in optical property, detects the presence of formaldehyde and concurrently determines the concentration thereof.

## Description

### TECHNICAL FIELD

This invention relates to formaldehyde detector bodies, formaldehyde detectors, formaldehyde detection methods and formaldehyde detection reagents, and particularly relates to formaldehyde detector bodies, detectors, detection methods and detection reagents all of which use a change in optical property.

### BACKGROUND ART

### (METHOD USING OPTICAL PROPERTY)

Methods for detecting formaldehyde include a method using absorption of infrared light. Specifically, the C=O bond in ketones and aldehydes including formaldehyde exhibits a strong absorption of infrared light at wavenumbers between 1765 and 1645 cm⁻¹. If the degree of absorption of infrared light within this wavenumber range is found out, ketone or aldehyde can be detected.

However, in analyzing a mixed gas containing ketone or aldehyde, the infrared light absorption due to the C=O bond in the above wavenumber range is common to all of ketones and aldehydes and, therefore, it is difficult to make a signal separation of formaldehyde alone. Hence, this method cannot be applied to the exclusive detection of formaldehyde.

### (METHOD USING CHEMICAL REACTION)

Most of detection methods using chemical reaction are those using a reaction between aldehyde and amine or those using a strong oxidizing force of aldehyde. In these methods, formaldehyde is detected by directly or indirectly detecting a product resulting from such a reaction. Known reactive reagents include fuchsin sulfites, azobenzene-p-phenylhydrazine sulfonic acid (APHS) and 4-amino-3-penten-2-one (see Non-Patent Document 1). However, there are specific combinations of ketones or aldehydes and their respective reactive reagents. Therefore, the reactive agent used is chosen according to the ketone or aldehyde to be detected.

For the detection of formaldehyde, particularly 4-amino-3-penten-2-one and similar reactive reagents have good selectivity and sensitivity.

Known detection methods using reactive reagents include a method of collecting a sample gas into a solution and detecting by high-performance liquid chromatography the degree of color production or luminescence of a product resulting from a reaction between ketone or aldehyde and a reactive reagent in the solution, and a method of packing a column in a detector tube with a detection reagent, sucking a predetermined amount of sample gas into the detector tube and detecting the presence/absence of ketone or aldehyde or determining the concentration thereof based on the degree of color production of the column resulting from a reaction of the detection reagent upon the suction of the sample gas (a detector tube method).

The former method using chromatography is excellent in sensitivity and selectivity but its operation is troublesome. On the other hand, the latter method using a detector tube is simple and convenient, but poor in detection accuracy and, therefore, not practical.

Sensors for detecting ammonia or the like using a composite optical waveguide are also proposed (see Non-Patent Documents 2 and 3). However, for these sensors, the production process of the composite optical waveguide is complicated and a prism must be used. Therefore, the sensors are lack in practicality.

### (METHOD USING COLOR PRODUCTION OF DETECTION REAGENT)

In view of the above problems, there is proposed a detector for detecting formaldehyde using a filter retaining a detection reagent reactable with formaldehyde, as disclosed in Patent Document 1.

In this detector, a filter impregnated with a detection reagent is exposed to a gas to be measured. Through the exposure, formaldehyde in the gas to be measured reacts with the detection reagent to give a color to the filter surface. The colored filter is irradiated with light of a particular wavelength and the reflected light from the filter is received. The produced color absorbs light in a particular absorption band. Therefore, the concentration of formaldehyde in the gas can be detected by detecting the reflected light.
Patent Document 1: Published Japanese Patent Application No. 2005-345390
Non-Patent Document 1: Analytica ChimicaActa, 119 (1980) 349-357
Non-Patent Document 2: "A Highly Sensitive Composite Optical Waveguide Applied to the Ammonia Sensor", Denki Kagaku oyobi Kogyo Butsuri Kagaku (Electrochemistry), Vol.69, No.11 (2001) 863-865
Non-Patent Document 3: "Analysis and Application of the Transmission Spectrum of a Composite Optical Waveguide" Applied Spectroscopy, Vo1.56, No.9 (2002) 1222-1227

### DISCLOSURE OF THE INVENTION

### PROBLEMS TO BE SOLVED BY THE INVENTION

Although the formaldehyde detector in Patent Document 1 detects reflected light, the reflected light is light reflected only once on the filter. Therefore, the detector is limited in the amount of light absorbed by the produced color, which leads to a low measurement accuracy.

Furthermore, a paper filter made such as of cellulose is used as the filter. Therefore, the amount of detection reagent stably retained by the filter is small, which limits the degree of color production and in turn limits the amount of light absorbed by the produced color. This deteriorates the reliability of measurement accuracy of the detector.

Particularly, the known formaldehyde detector measures the optical property from the filter surface exposed to the gas to be measured, or in other words, the surface of the filter exposed to the gas and the measuring surface of the filter are common. This restricts the layout of optical instruments and thereby inhibits downsizing of the detector.

The present invention has been made in view of the foregoing points and an object thereof is to retain a sufficient amount of detection reagent in the detector, increase the amount of light absorbed, increase the reliability of measurement accuracy and downsize the detector.

### MEANS TO SOLVE THE PROBLEMS

The present invention employs a porous layer for stably carrying a detection reagent for detecting formaldehyde and concurrently employs an optical waveguide through which light propagates while repeatedly reflecting.

More specifically, the inventors made an intensive study over the years and found that the use of a mesoporous layer provides stable carriage of a sufficient amount of detection reagent therein and that the use of an optical waveguide enables repeated light reflection and thereby ensures a sufficient amount of light absorbed. Thus, the outside of the porous layer is used as a surface exposed to the gas to be measured and the inside thereof is used as a measuring surface.

### (CONSTITUTION)

First to seventeenth aspects of the invention relate to a formaldehyde detector body, eighteenth to twenty-second aspects of the invention relate to a formaldehyde detector including the detector body, twenty-third to twenty-fifth aspects of the invention relate to a formaldehyde detection method, and a twenty-sixth aspect of the invention relates to a formaldehyde detection reagent.

Specifically, the first aspect of the invention is directed to a formaldehyde detector body for detecting the formaldehyde concentration based on a change in optical property due to color production resulting from a reaction between formaldehyde and a detection reagent. Furthermore, the formaldehyde detector body includes a base material (31) constituting an optical waveguide in which incident light propagates therethrough while repeating total reflection and then emits therefrom. In addition, the formaldehyde detector body includes a mesoporous layer (32) formed on at least part of a light-reflecting surface constituting a surface of the base material (31), the mesoporous layer (32) carrying the detection reagent.

The second aspect of the invention is the formaldehyde detector body according to the first aspect of the invention, wherein the detection reagent is one selected from the group consisting of 4-aminopent-3-en-2-one, 4-aminooct-3-en-2-one, 5-aminohept-4-en-3-one, 4-amino-4-phenylbut-3-en-2-one, 3-amino-1,3-diphenylprop-2-en-1-one and 2-aminopent-3-en-2-one.

The third aspect of the invention is the formaldehyde detector body according to the first aspect of the invention, wherein the mesoporous layer (32) is impregnated in its mesopores with the detection reagent.

The fourth aspect of the invention is the formaldehyde detector body according to the first aspect of the invention, wherein the mesoporous layer (32) is a layer that transmits light in the optical absorption band of a color produced by the reaction between formaldehyde and the detection reagent.

The fifth aspect of the invention is the formaldehyde detector body according to the first aspect of the invention, wherein the mesoporous layer (32) has mesopores of which mean diameter is one-tenth or less than that of a light wavelength in the optical absorption band of a color produced by the reaction between formaldehyde and the detection reagent.

The sixth aspect of the invention is the formaldehyde detector body according to the first aspect of the invention, wherein the mesoporous layer (32) is formed with a thickness suited to light in the optical absorption band of a color produced by the reaction between formaldehyde and the detection reagent.

The seventh aspect of the invention is the formaldehyde detector body according to the sixth aspect of the invention, wherein the mesoporous layer (32) has a thickness of 0.01 to 2 µm.

The eighth aspect of the invention is the formaldehyde detector body according to the first aspect of the invention, wherein the mesoporous layer (32) is a silica layer.

The ninth aspect of the invention is the formaldehyde detector body according to the first aspect of the invention, wherein the mesoporous layer (32) is a mesoporous silica layer having a regularly arranged mesoporous structure synthesized from ethyl orthosilicate by a sol-gel process using a micelle of surfactant or block copolymer as a molecular template.

The tenth aspect of the invention is the formaldehyde detector body according to the first aspect of the invention, wherein the base material (31) is a material that transmits light in the optical absorption band of a color produced by the reaction between formaldehyde and the detection reagent.

The eleventh aspect of the invention is the formaldehyde detector body according to the first aspect of the invention, wherein the base material (31) is formed of a rectangular flat plate.

The twelfth aspect of the invention is the formaldehyde detector body according to the first aspect of the invention, wherein the base material (31) is formed of a cylinder.

The thirteenth aspect of the invention is the formaldehyde detector body according to the eleventh aspect of the invention, wherein the mesoporous layer (32) is formed on the whole area of a light-reflecting surface constituting one side of the base material (31).

The fourteenth aspect of the invention is the formaldehyde detector body according to the first aspect of the invention, wherein the base material (31) has a thickness of 0.05 to 2 mm.

The fifteenth aspect of the invention is the formaldehyde detector body according to the first aspect of the invention, wherein the base material (31) comprises a glass substrate.

The sixteenth aspect of the invention is the formaldehyde detector body according to the first aspect of the invention, wherein the light entering the base material (31) contains light in the optical absorption band of a color produced by the reaction between formaldehyde and the detection reagent.

The seventeenth aspect of the invention is the formaldehyde detector body according to the sixteenth aspect of the invention, wherein the light entering the base material (31) is light of approximately 405-nm wavelength.

The eighteenth aspect of the invention is a formaldehyde detector, including the formaldehyde detector body according to any one of the first to seventeenth aspects of the invention, for detecting the formaldehyde concentration. Furthermore, the formaldehyde detector includes: a light emitter (61) for emitting light to the base material (31) of the detector body (30); and a light receiver (62) for receiving light emitted from the base material (31) of the detector body (30). In addition, the formaldehyde detector includes a signal processing means (40) for receiving an optical signal from the light receiver (62), detecting a change in optical property due to color production resulting from a reaction between formaldehyde and a detection reagent and determining the formaldehyde concentration based on the change in optical property.

The nineteenth aspect of the invention is the formaldehyde detector according to the eighteenth aspect of the invention, wherein the detector body (30) is detachably provided.

The twentieth aspect of the invention is the formaldehyde detector according to the eighteenth aspect of the invention and further including a display (50) for displaying the formaldehyde concentration determined by the signal processing means (40).

The twenty-first aspect of the invention is the formaldehyde detector according to the eighteenth aspect of the invention, wherein the light emitter (61) is a laser diode or a light-emitting diode.

The twenty-second aspect of the invention is the formaldehyde detector according to the eighteenth aspect of the invention, wherein the light receiver (62) is a photodiode.

The twenty-third aspect of the invention relates to a detection method and is directed to a formaldehyde detection using: a detector body including a base material (31) constituting an optical waveguide through which light propagates while repeating total reflection; and a mesoporous layer (32) formed on at least part of a light-reflecting surface constituting a surface of the base material (31), the mesoporous layer (32) carrying a detection reagent producing a color by reaction with formaldehyde. Furthermore, the detection method includes an exposure step of exposing the mesoporous layer (32) to a gas to be measured. Furthermore, the detection method includes a signal processing step of allowing light to propagate through the base material (31) after a lapse of a predetermined period of time of the reaction between formaldehyde and the detection reagent, then detecting a change in optical property based on light emitted from the base material (31) and determining the formaldehyde concentration based on the change in optical property.

The twenty-fourth aspect of the invention is the formaldehyde detection method according to the twenty-third aspect of the invention, wherein the detection reagent is one selected from the group consisting of 4-aminopent-3-en-2-one, 4-aminooct-3-en-2-one, 5-aminohept-4-en-3-one, 4-amino-4-phenylbut-3-en-2-one, 3-amino-1,3-diphenylprop-2-en-1-one and 2-aminopent-3-en-2-one.

The twenty-fifth aspect of the invention is the formaldehyde detection method according to the twenty-third aspect of the invention and further including a display step of displaying the determined formaldehyde concentration following the signal processing step.

A detection reagent for formaldehyde according to the twenty-sixth aspect of the invention is 4-aminooct-3-en-2-one or 5-aminohept-4-en-3-one.

### (OPERATION)

In the first, eighteenth and twenty-third aspects of the invention, the mesoporous layer (32) carrying a detection reagent for formaldehyde is exposed to a gas to be measured. Through the exposure, the detection reagent produces a color. Light is emitted to the base material (31) constituting an optical waveguide on which the mesoporous layer (32) is formed. For example, in the twenty-first aspect of the invention, light is emitted from a laser diode or a light-emitting diode to the base material (31). Then, the light propagates through the base material (31) and, more specifically, propagates while repeating total reflection and then exits from the base material (31).

For example, in the eleventh and twelfth aspects of the invention, the light propagates through the base material (31) in the form of a rectangular flat plate or a cylinder. Particularly in the fifteenth aspect of the invention, the light propagates through a glass substrate.

The light having propagated through the base material (31) and exited from it is received, for example, in the twenty-second aspect of the invention, by a light receiver (62) formed of a photodiode. The light propagating through the base material (31) is absorbed, in part of a particular wavelength, by the produced color, whereby the intensity of light of the particular wavelength decreases. By detecting such a change in optical property, the concentration of formaldehyde in the gas to be measured is determined.

Particularly in the second, twenty-fourth and twenty-sixth aspects of the invention, since the detection reagent is selected as a particular substance, it certainly reacts with formaldehyde. For example, lutidine is produced by reaction between formaldehyde and the detection reagent to produce a color.

In the fourth and eighth to tenth aspects of the invention, since the mesoporous layer (32) and the base material (31) are materials that transmit light in the optical absorption band of the produced color, a change in optical property due to the color production is accurately reflected in the detection.

In the fifth aspect of the invention, since the mesopores in the mesoporous layer (32) are selected to have a predetermined diameter, this ensures a given amount of detection reagent carried therein.

In the sixth and seventh aspects of the invention, since the mesoporous layer (32) is selected to have a predetermined thickness, this shortens the period of time of the reaction from the outside surface of the mesoporous layer (32) to the inside surface thereof located on the base material side.

In the sixteenth and seventeenth aspects of the invention, since the light entering the base material (31) is selected to have a predetermined wavelength, this ensures a change in optical property due to color production resulting from the reaction between formaldehyde and the detection reagent. Particularly, if lutidine is produced by chemical reaction between formaldehyde and the detection reagent, it exhibits an optical absorption peak at approximately 405-nm wavelength. Therefore, light of approximately 405-nm wavelength is let into the base material (31).

In the nineteenth aspect of the invention, since the detector body (30) is detachably provided, the measurement operation is easily conducted.

In the twentieth and twenty-fifth aspects of the invention, since the formaldehyde concentration is displayed, the measurement result can be promptly recognized.

### ADVANTAGEOUS EFFECTS OF INVENTION

According to the first to twenty-fifth aspects of the invention, since a detection reagent for formaldehyde is carried in the mesoporous layer (32), a given amount of detection reagent can be stably retained therein. As a result, a sufficient reaction can be ensured between formaldehyde and the detection reagent, which ensures a necessary color production for measurement.

Furthermore, since light propagates through the base material (31) serving as an optical waveguide and repeats reflection therein, a sufficient change in optical property can be ensured. Thus, the combination of the mesoporous layer (32) and the optical waveguide provides a significant improvement in measurement accuracy.

Moreover, since the mesoporous layer (32) is used, the reaction between formaldehyde and the detection reagent promptly progresses from the outside surface to the inside surface of the mesoporous layer (32). Therefore, the outside and inside surfaces of the mesoporous layer (32) can be used as a surface exposed to a gas to be measured and a measuring surface, respectively. This results in a significant increase in the flexibility of layout of optical instruments and the like and thereby downsizes the formaldehyde detector.

In addition, since the base material (31) constitutes an optical waveguide, this increases the flexibility of arrangement of a light emitter and the like. As a result, various components can be easily arranged, which further downsizes the formaldehyde detector.

According to the second and twenty-fourth aspects of the invention, since the detection reagent is selected as recognition molecules of a particular substance, formaldehyde can be certainly reacted with the detection reagent and can certainly cause color production.

Particularly according to the twenty-sixth aspect of the invention, if 5-amino-4-hepten-3-one or 4-amino-4-phenyl-3-buten-2-one is used as the detection reagent in combination with modification of the inside surface of the base material (31) with alkyl chains, the detection reagent itself before reaction and a product obtained by the reaction can be stabilized.

According to the third aspect of the invention, since the mesoporous layer (32) is impregnated with the detection reagent, the detection reagent can be certainly retained therein.

According to the fourth and tenth aspects of the invention, since the mesoporous layer (32) and the base material (31) are made of materials that transmit light in the optical absorption band of the produced color, a change in optical property due to color production of the detection reagent can be accurately detected.

According to the fifth aspect of the invention, since the mesopores in the mesoporous layer (32) are selected to have a predetermined diameter, this ensures a sufficient amount of detection reagent carried therein and therefore ensures a sufficient color production of the detection reagent.

According to the sixth and seventh aspects of the invention, since the mesoporous layer (32) is selected to have a predetermined thickness, the color production of the detection reagent promptly progresses to the surface of the mesoporous layer (32) located on the base material side. This shortens the reaction time.

According to the eighth aspect of the invention, since the mesoporous layer (32) is a silica layer, a porous layer suited to detect formaldehyde can be easily produced.

According to the ninth aspect of the invention, since the mesoporous layer (32) is a mesoporous silica layer having a regularly arranged mesoporous structure, the detection reagent can be uniformly carried in the entire mesoporous layer (32) and, thus, formaldehyde and the detection reagent can be uniformly reacted with each other in the entire mesoporous layer (32).

According to the eleventh aspect of the invention, since the base material (31) is formed of a rectangular flat plate, it can be easily formed and the mesoporous layer (32) can be easily formed on it.

According to the twelfth aspect of the invention, since the base material (31) is formed of a cylinder, a sufficiently long optical waveguide can be easily formed.

According to the thirteenth aspect of the invention, since the mesoporous layer (32) is formed on one side of the base material (31), the detection accuracy for formaldehyde can be increased with a simple structure.

According to the fourteenth aspect of the invention, since the base material (31) is formed to have a predetermined thickness, the manufacture thereof can be facilitated.

According to the fifteenth aspect of the invention, since the base material (31) comprises a glass substrate, it can be easily manufactured.

According to the sixteenth and seventeenth aspects of the invention, since the light entering the base material (31) is selected to have a predetermined wavelength, this ensures a change in optical property due to color production resulting from the reaction between formaldehyde and the detection reagent. Particularly, if lutidine is produced by chemical reaction between formaldehyde and the detection reagent, it exhibits an optical absorption peak at approximately 405-nm wavelength. Therefore, light of approximately 405-nm wavelength can be let into the base material (31).

According to the nineteenth aspect of the invention, since the detector body (30) is detachably provided, the measurement operation can be facilitated.

According to the twentieth and twenty-fifth aspects of the invention, since the formaldehyde concentration is displayed, the measurement result can be promptly recognized.

According to the twenty-first aspect of the invention, since the light emitter (61) is formed of a light-emitting diode or the like, the entire structure of the formaldehyde detector can be simplified. This reduces the size and weight of the formaldehyde detector.

According to the twenty-second aspect of the invention, since the light receiver (62) is formed of a photodiode, it can certainly receive the light emitted from the base material (31).

Particularly, if the light emitter (61) is formed of a light-emitting diode and the light receiver (62) is formed of a photodiode, this provides a formaldehyde detector operating with a low power consumption.

### BRIEF DESCRIPTION OF DRAWINGS

[FIG. 1] FIG. 1 is a block diagram showing a schematic structure of a formaldehyde detector.
[FIG. 2] FIG. 2 is a schematic perspective view showing an essential part of the formaldehyde detector.
[FIG. 3] FIG. 3 is a schematic view showing the longitudinal cross section of a detection element.
[FIG. 4] FIG. 4 is plot showing the formaldehyde response of a detection element described in an example.
[FIG. 5] FIG. 5 is plot showing the relationship between the formaldehyde concentration detected by the detection element described in the example and the intensity of transmitted light.
[FIG. 6] FIG. 6 is plot showing the formaldehyde response of another detection element of reagent application type described in another example.
[FIG. 7] FIG. 7 is a schematic perspective view showing an essential part of a formaldehyde detector according to another embodiment.
[FIG. 8] FIG. 8 is a table listing formaldehyde detection reagents.

### LIST OF REFERENCE NUMERALS

- 10: formaldehyde detector
- 20: gas suction part
- 30: detection element (detector body)
- 31: base material (glass substrate)
- 32: mesoporous layer (thin mesoporous silica film)
- 40: signal processing part (signal processing means)
- 50: input/output part (display)
- 60: light
- 61: light emitter
- 62: light receiver

### BEST MODE FOR CARRYING OUT THE INVENTION

An embodiment of the present invention will be explained below in detail with reference to the drawings.

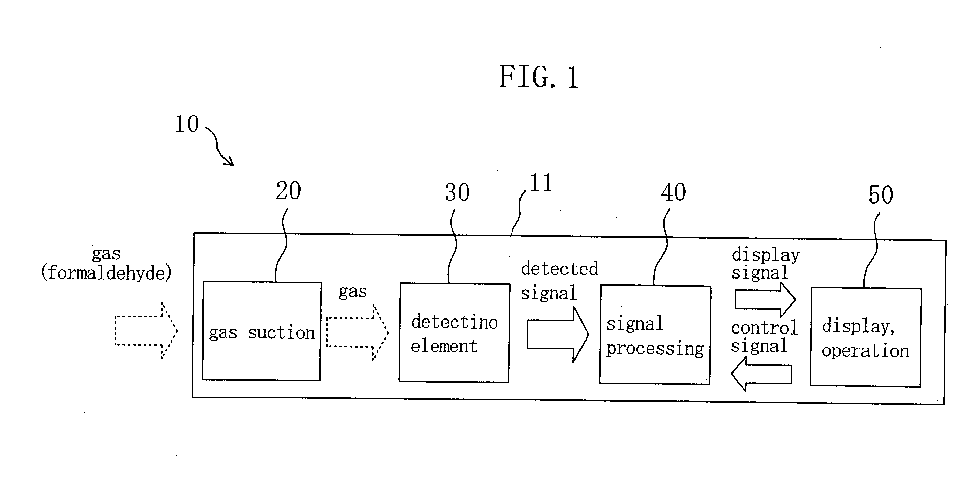

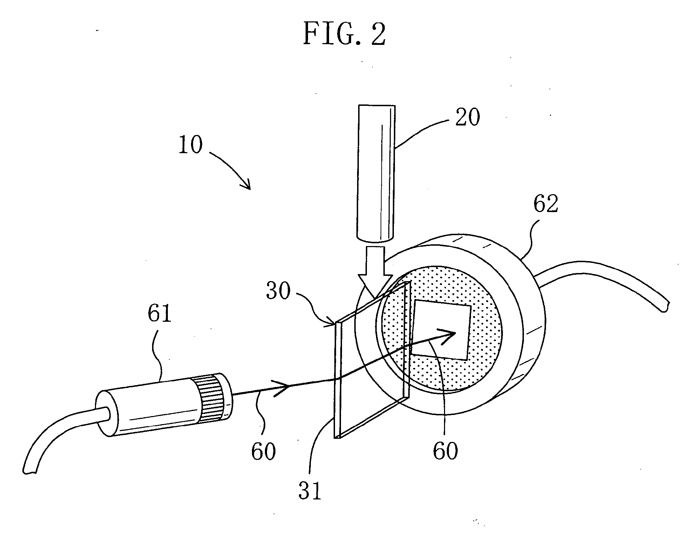

As shown in FIGS. 1 and 2, a formaldehyde detector (10) according to this embodiment is used to detect the concentration of formaldehyde contained in various kinds of gases to be measured, such as room air. Particularly, the formaldehyde detector (10) uses color production due to a reaction of formaldehyde with a detection reagent (recognition molecules) and detects the concentration of formaldehyde based on the nature of the produced color giving a change in optical property.

The formaldehyde detector (10) includes a casing (11) and the casing (11) contains a gas suction part (20), a detection element (30) for detecting formaldehyde, a signal processing part (40) for processing a detected signal, and an input/output part (50). The input/output part (50) displays the detection result thereon and is used to operate the formaldehyde detector (10) therethrough.

The gas suction part (20), which is not shown, includes a fan or the like and is configured to suck a gas to be measured into the casing (11) and blow the gas onto the detection element (30).

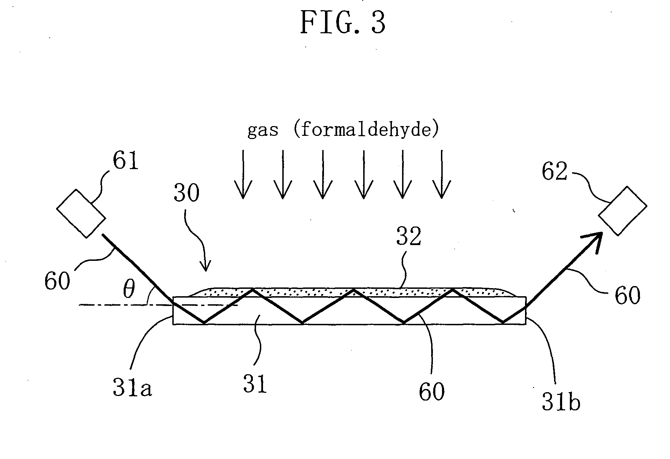

The detection element (30) is the most remarkable feature of the present invention and constitutes a formaldehyde detector body. As shown in FIG. 3, the detection element (30) includes a base material (31) and a mesoporous layer (32) formed on one surface of the base material (31).

The mesoporous layer (32) is formed of a thin mesoporous silica film having a large number of mesopores of several nanometer diameter. The mesopores in the mesoporous layer (32) carry a detection reagent, or in other words, the detection reagent is retained in the mesopores. The outside surface of the mesoporous layer (32) serves as an exposure surface to be exposed to the gas to be measured, while the inside surface thereof serves as a surface to which the base material (31) is bonded (a measuring surface). Thus, the mesoporous layer (32) is configured so that formaldehyde enters into the mesopores through the exposure surface and thereby reacts with the detection reagent and that a color is produced from the outside surface to the inside surface, i.e., the measuring surface.

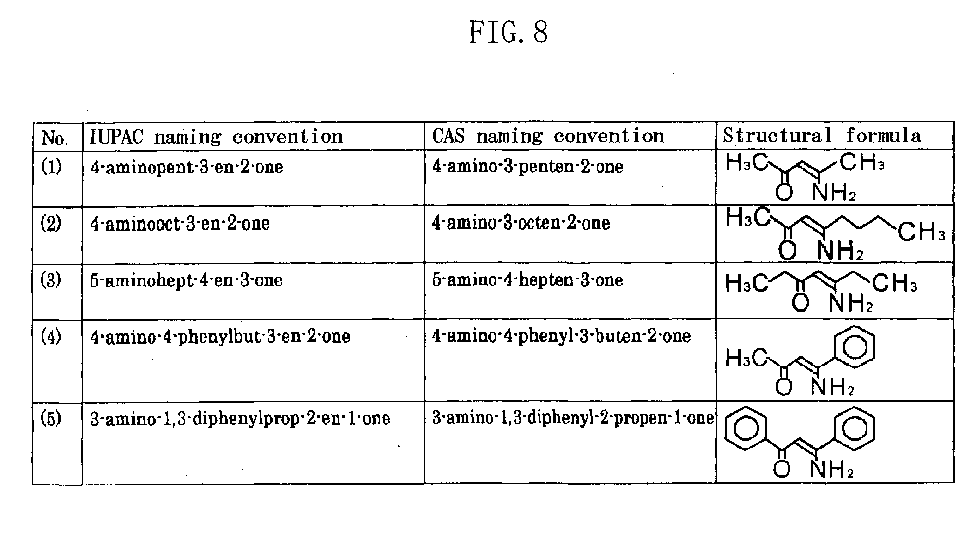

The detection reagent is one selected from the group consisting of enaminone derivatives shown in FIG. 8 and other enaminone derivatives, such as 2-aminopent-3-en-2-one. These detection reagents can chemically react with formaldehyde to produce lutidine. Lutidine as a product of the reaction exhibits an absorption peak characteristic that it best absorbs light at approximately 405-nm wavelength.

In other words, the mesoporous layer (32) is formed in a layer, depending on the detection reagent, that transmits light in the wavelength range that is absorbed by a color produced by the reaction between formaldehyde and the detection reagent.

The mesopores in the mesoporous layer (32) are selected to have a mean diameter that is one-tenth or less than that of a light wavelength in the wavelength range that is absorbed by a color produced by the reaction between formaldehyde and the detection reagent.

Furthermore, the mesoporous layer (32) is formed with a thickness suited to light in the wavelength range that is absorbed by a color produced by the reaction between formaldehyde and the detection reagent, for example, a thickness of 0.01 to 2 µm.

The base material (31) is formed of a rectangular flat glass substrate and constitutes an optical waveguide for confining light (60) therewithin and propagating light (60) therethrough. The base material (31) is formed with a thickness of 0.05 to 2 mm. Opposed two of the four end faces along the thickness direction form an incident plane (31a) and an emitting plane (31b) of light (60).

A light emitter (61) is placed to face the incident plane (31 a) of the base material (31), while a light receiver (62) is placed to face the emitting plane (31b). The base material (31) is configured so that incident light (60) propagates therethrough while repeating total reflection.

In other words, the base material (31) is formed of a transparent and colorless flat plate that transmits light in the wavelength range that is absorbed by a color produced by the reaction between formaldehyde and the detection reagent.

The mesoporous layer (32) is formed on the whole area of a light-reflecting surface constituting one side of the base material (31). Upon the total reflection, light (60) propagating through the base material (31) seeps into the mesoporous layer (32) and light of a particular wavelength is absorbed in the mesoporous layer (32).

The detection element (30) is detachably attached to the casing (11), although not shown.

The light emitter (61) is formed of a laser diode or a light-emitting diode and set to form an incident angle θ of 33 degrees with the incident plane (31a) of the base material (31). Light (60) emitted by the light emitter (61) contains light in the wavelength range that is absorbed by a color produced by the reaction between formaldehyde and the detection reagent and, specifically, light of approximately 405-nm wavelength. In other words, if the product due to the reaction between formaldehyde and the detection reagent is lutidine, the light wavelength of the peak in its absorption band is 405 nm. Therefore, light (60) emitted by the light emitter (61) is set to contain light of the above wavelength to be absorbed by the produced color.

The light receiver (62) is formed of a photodiode and configured to receive light (60) having propagated through the base material (31).

The signal processing part (40) constitutes a signal processing means for receiving an optical signal from the light receiver (62) and processing it. The signal processing part (40) detects a change in optical property due to color production, i.e., a decrease in the intensity of light of a predetermined wavelength, and determines, based on the decrease, the formaldehyde concentration by an end point assay or a rate assay.

The input/output part (50) constitutes a display for displaying the formaldehyde concentration thereon and also constitutes an operating means for performing operations including on/off of a measurement switch. Upon receipt of a signal from the signal processing part (40), the input/output part (50) displays the absolute value of the formaldehyde concentration or other values in digital form.

### <MANUFACTURE OF DETECTION ELEMENT>

Next, a description is given of a method for manufacturing the above detection element (30).

The mesoporous layer (32) is a known porous silica layer having regularly arranged mesopores, is made of a known material and formed by a known manufacturing method (see Domestic Re-Publication of PCT International Application No. 99/026881, Published Japanese Patent Application No. H11-049511 and Published Japanese Patent Application No. 2002-250713). Specifically, the mesoporous layer (32) may be made of any kind of mesoporous silica and is typically a mesoporous silica layer having a regularly arranged mesoporous structure synthesized from ethyl orthosilicate by a sol-gel process using a micelle of surfactant or block copolymer as a molecular template.

Drops of the above composition are put on a base material (31) formed of a specified glass substrate and then formed into a thin film such as by spin coating. The thin film is fired at 350°C to 450°C such as by an electric furnace. Thus, a thin mesoporous silica film can be obtained as a mesoporous layer (32) formed on one surface of the base material (31).

Next, a thin mesoporous film is formed on one surface of the glass plate serving as the base material (31). Meanwhile, a solution is prepared in which a detection reagent for formaldehyde is dissolved in a volatile poor solvent.

The glass plate with the mesoporous layer (32) previously formed is immersed in the obtained solution or the solution is applied to the outside surface of the mesoporous layer (32). Then, the solvent is removed to introduce a coloring reagent into the mesopores.

Examples of the detection reagent include those shown in FIG. 8.

The reagent shown in FIG. 8 in No. (1) is one commercially available as a product name "Fluoral-P" from Dojindo Laboratories. Alternatively, such a reagent for detecting formaldehyde is disclosed in the article published in Analytica Chimica Acta, 119 (1980), 349-357, by B. J. Compton et al.

The reagents shown in FIG. 8 in Nos. (2) and (3) are those newly synthesized by the inventors.

The reagents shown in FIG. 8 in Nos. (4) and (5) are those disclosed by Koji Suzuki, Kanagawa Academy of Science and Technology (and Keio University), et al. Specifically, see Published Japanese Patent Application No. 2003-207498 entitled "Reagent for Measuring Formaldehyde and Method for Measuring Formaldehyde Using the Same" and Published Japanese Patent Application No. 2004-157103 entitled "Formaldehyde Detector Body".

### <FORMALDEHYDE DETECTING OPERATION>

Next, a description is given of a formaldehyde detecting operation of the above-described formaldehyde detector (10) together with a description of a formaldehyde detection method.

First, the formaldehyde detector (10) is set in an atmosphere of a given gas to be measured. Then, when the measurement switch is turned on through the input/output part (50), the gas suction part (20) sucks the gas to be measured into the casing (11) and blows the gas onto the detection element (30). Thus, the mesoporous layer (32) is exposed to the gas to be measured (exposure step). The exposure is carried out for one minute, for example.

When the mesoporous layer (32) is exposed to the gas to be measured, formaldehyde contained in the gas enters into the mesopores in the mesoporous layer (32) and reacts with the detection reagent. The detection reagent produces a color by reaction with formaldehyde, whereby the surface of the mesoporous layer (32) changes color.

For example, if the detection reagent is an enaminone derivative, it chemically reacts with formaldehyde to produce lutidine. In the case of lutidine, the wavelength of light best absorbed by the produced color is 405 nm.

Therefore, when a predetermined reaction time has passed after the exposure, light (60) of 405-nm wavelength is emitted from the light emitter (61) and let into the base material (31) through the incident plane (31a). For example, when ten minutes has passed after the exposure, light (60) is emitted.

The light (60) having entered the base material (31) propagates through the base material (31) serving as an optical waveguide while repeating total reflection. The light (60) propagating through the base material (31) seeps into the mesoporous layer (32) upon total reflection, while the detection reagent produces a color. Therefore, light of a particular wavelength, for example, light of 405-nm wavelength, is absorbed in the color and the intensity of light of the particular wavelength decreases.

The light (60) emitted from the emitting plane (31b) of the base material (31) is received by the light receiver (62) formed of a photodiode, so that an optical signal is input to the signal processing part (40). The signal processing part (40) detects a change in optical property, i.e., detects the above intensity of light, and then, based on the decrease in the intensity, detects the presence of formaldehyde and concurrently determines the concentration of formaldehyde (signal processing step).

Thereafter, based on an output signal of the signal processing part (40), the input/output part (50) displays the formaldehyde concentration (display step).

The signal processing part (40) detects the formaldehyde concentration, for example, by an end point assay. Specifically, let the intensity of transmitted light before exposure be denoted by IO and the intensity of transmitted light at an end point be denoted by I. The minus log of I/IO is calculated for a given concentration C of formaldehyde and the formaldehyde concentration in the gas to be measured is detected based on the amount of decrease in the intensity of transmitted light.

The signal processing part (40) may employ a rate assay, for example. Specifically, the formaldehyde concentration in the gas to be measured may be detected based on the rate of decrease (gradient) of the intensity of transmitted light to the intensity of transmitted light before exposure.

### <ADVANTAGEOUS EFFECTS OF EMBODIMENT>

As seen from the above, according to this embodiment, since a detection reagent for formaldehyde is carried in the mesoporous layer (32), a given amount of detection reagent can be stably retained therein. As a result, a sufficient reaction can be ensured between formaldehyde and the detection reagent, which ensures a necessary color production for measurement.

Furthermore, since light propagates through the base material (31) serving as an optical waveguide and repeats reflection therein, a sufficient change in optical property can be ensured. Thus, the combination of the mesoporous layer (32) and the optical waveguide provides a significant improvement in measurement accuracy.

Moreover, since the mesoporous layer (32) is used, the reaction between formaldehyde and the detection reagent promptly progresses from the outside surface to the inside surface of the mesoporous layer (32). Therefore, the outside and inside surfaces of the mesoporous layer (32) can be used as a surface exposed to a gas to be measured and a measuring surface, respectively. This results in a significant increase in the flexibility of layout of optical instruments and the like and thereby downsizes the formaldehyde detector.

In addition, since the base material (31) constitutes an optical waveguide, this increases the flexibility of arrangement of a light emitter and the like. As a result, various components can be easily arranged, which further downsizes the formaldehyde detector.

Furthermore, since the detection reagent is selected as recognition molecules of a particular substance, formaldehyde can be certainly reacted with the detection reagent and can certainly cause color production. Particularly, if 5-amino-4-hepten-3-one or 4-amino-4-phenyl-3-buten-2-one is used as the detection reagent in combination with modification of the inside surface of the base material (31) with alkyl chains, the detection reagent itself before reaction and a product obtained by the reaction can be stabilized.

Moreover, since the mesoporous layer (32) and the base material (31) are made of materials that transmit light in the optical absorption band of the produced color, a change in optical property due to color production of the detection reagent can be accurately detected.

In addition, since the mesopores in the mesoporous layer (32) are selected to have a predetermined diameter, this ensures a sufficient amount of detection reagent carried therein and therefore ensures a sufficient color production of the detection reagent.

Furthermore, since the mesoporous layer (32) is selected to have a predetermined thickness, the color production of the detection reagent promptly progresses to the surface of the mesoporous layer (32) located on the base material side. This shortens the reaction time.

Moreover, since the mesoporous layer (32) is formed of a thin silica film, a porous layer suited to detect formaldehyde can be easily produced.

In addition, since the mesoporous layer (32) is a mesoporous silica layer having a regularly arranged mesoporous structure, the detection reagent can be uniformly carried in the entire mesoporous layer (32) and, thus, formaldehyde and the detection reagent can be uniformly reacted with each other in the entire mesoporous layer (32).

Furthermore, since the base material (31) is formed of a rectangular flat plate, it can be easily formed and the mesoporous layer (32) can be easily formed on it.

Moreover, since the mesoporous layer (32) is formed on one side of the base material (31), the detection accuracy for formaldehyde can be increased with a simple structure.

In addition, since the base material (31) is formed to have a predetermined thickness, the manufacture thereof can be facilitated.

Furthermore, since the base material (31) comprises a glass substrate, it can be easily manufactured.

Moreover, since the light entering the base material (31) is selected to have a predetermined wavelength, this ensures a change in, optical property due to color production resulting from the reaction between formaldehyde and the detection reagent. Particularly, if lutidine is produced by chemical reaction between formaldehyde and the detection reagent, it exhibits an optical absorption peak at approximately 405-nm wavelength. Therefore, light of approximately 405-nm wavelength can be let into the base material (31).

In addition, since the detector body (30) is detachably provided, the measurement operation can be facilitated.

Furthermore, since the formaldehyde concentration is displayed, the measurement result can be promptly recognized.

Moreover, since the light emitter (61) is formed of a light-emitting diode or the like, the entire structure of the formaldehyde detector can be simplified. This reduces the size and weight of the formaldehyde detector.

In addition, since the light receiver (62) is formed of a photodiode, it can certainly receive the light emitted from the base material (31).

Furthermore, since the light emitter (61) is formed of a light-emitting diode and the light receiver (62) is formed of a photodiode, this provides a formaldehyde detector operating with a low power consumption.

Moreover, if the mesoporous layer (32) is impregnated with the detection reagent, the detection reagent can be certainly retained therein.

### EXAMPLES

Next, examples of the above-described detection element (30) will be described. (1) PRODUCTION OF THIN MESOPOROUS SILICA FILM (MESOPOROUS LAYER) AND INTRODUCTION OF ENAMINONE INTO THIN MESOPOROUS SILICA RILM

### (MESOPOROUS LAYER)

A description is given first of the production of a thin mesoporous silica film. First, a thin mesoporous silica film was formed on a glass substrate as follows. The production was carried out according to the manner described in Non-Patent Documents 2 and 3.

Specifically, 1-propanol, dilute hydrochloric acid and 2-butanol were added to ethyl orthosilicate and the mixed liquid was stirred. Then, an aqueous solution of cetyltrimethylammonium chloride (C16TMA) was added to the mixed liquid, followed by stirring. Then, a few drops of the solution obtained were put on the glass substrate and formed in a thin film by a spin coater. Subsequently, a product thus obtained was fired in the atmosphere at 400°C by an electric furnace. The evaluation of the structure in the thin film was checked by an X-ray diffractometer (XRD).

Next, a description is given of an example of introduction of enaminone into mesopores in the thin mesoporous film using an impregnation process.

First, a solution was prepared by adding 50 mg of enaminone (2-amino-3-penten-2-one) to a mixed solvent of 0.006 mL of ethanol and 6 mL of n-pentane and the glass substrate with a thin mesoporous silica film produced by the above method was immersed in the solution for an hour to a few days. Thereafter, the glass substrate with a thin mesoporous silica film was picked up from the solution and then sufficiently exposed at room temperature to cool air from a dryer to remove the solvent.

When a spectroscopic ellipsometer was used to measure the refractive indices of the thin mesoporous film before and after impregnation with enaminone, the refractive indices of the thin mesoporous film before and after impregnation were n = 1.35 and n = 1.49, respectively. The increase in refractive index shows that enaminone was introduced into the mesopores by the above impregnation.

Next, the detection element (30) produced in the above manner was assembled into the apparatus shown in FIG. 2 and irradiated with light (60) of 405-nm wavelength. The intensity of light (60) emitted from the detection element (30) was measured by the detector.

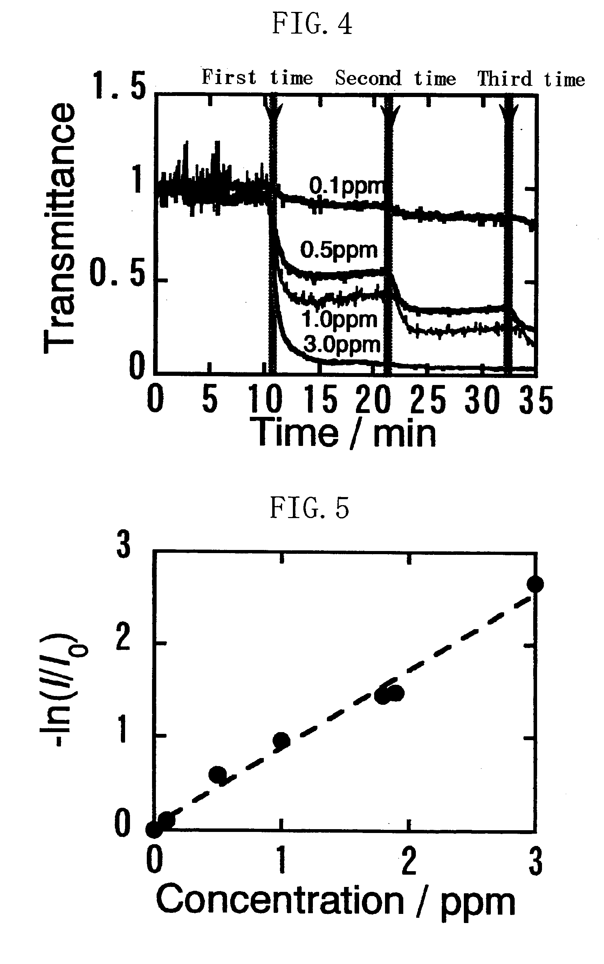

FIG. 4 shows exemplary measurement results. The measurement conditions were as follows: dry air containing 0.1 ppm of formaldehyde under atmospheric pressure at 26.0°C, dry air containing 0.5 ppm of formaldehyde under the same pressure and temperature conditions, dry air containing 1.0 ppm of formaldehyde under the same pressure and temperature conditions and dry air containing 3.0 ppm of formaldehyde under the same pressure and temperature conditions were individually blown onto the detection element (30) at a flow rate of 1 L/min for one minute to expose the detection element (30) to the individual formaldehyde gases.

Let the minimum value of decrease in the intensity of transmitted light after exposure to each formaldehyde gas be an end point. Let the intensity of transmitted light before exposure be denoted by IO and the intensity of transmitted light at the end point be denoted by I. If the minus log of I/IO was plotted against the formaldehyde concentration C, an analytical curve having a linearity of R = 0.993 was obtained as shown in FIG. 5.

The above is summarized as follows: (1) A detection element (30) was produced by introducing enaminone into mesopores in a thin mesoporous silica film on a glass substrate. (2) With the use of the detection element (30), formaldehyde in the atmosphere could be detected in the concentration range from 0.1 to 3.0 ppm under the above measurement conditions. (3) The analytical curve obtained by the measurement results had a linearity showing a correlation coefficient R = 0.993.

### (2) INTRODUCTION OF ENAMINONE BY APPLICATION

In another example of the detection element (30), introduction of enaminone into the mesopores can be implemented by application.

Specifically, a thin mesoporous silica film was prepared in the same manner as shown in Example (1). Next, enaminone (2-amino-3-penten-2-one) was dissolved in a mixed solvent of n-pentane and ethanol. The solution was applied to a surface of the thin mesoporous film with a brush and the solvent was then removed by cool air from a dryer.

The detection element (30) thus obtained was assembled into the apparatus shown in FIG. 2 and examined for its response to formaldehyde.

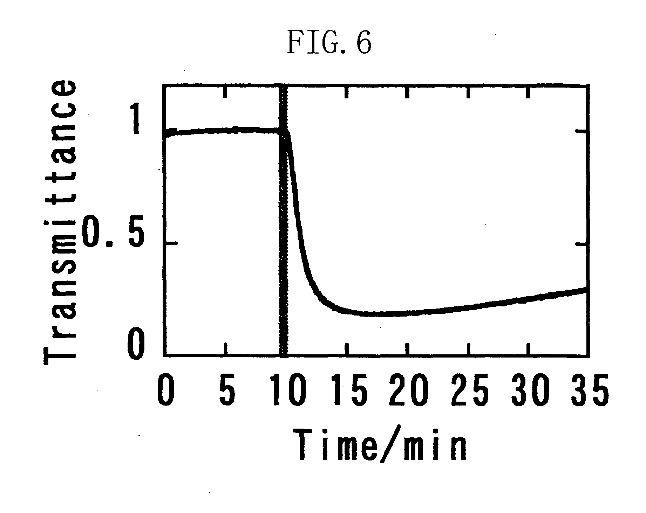

FIG. 6 shows the response to formaldehyde. The measurement conditions were as follows: dry air containing 1.5 ppm of formaldehyde under atmospheric pressure at 20.1°C was blown onto the detection element (30) at a flow rate of 1.0 L/min for one minute. The measurement results showed that, like the case of enaminone introduction by impregnation, the detection element (30) produced by enaminone application also had a sufficient ability to detect formaldehyde.

### ANOTHER BEST MODE FOR CARRYING OUT THE INVENTION

Next, another embodiment of the present invention will be described.

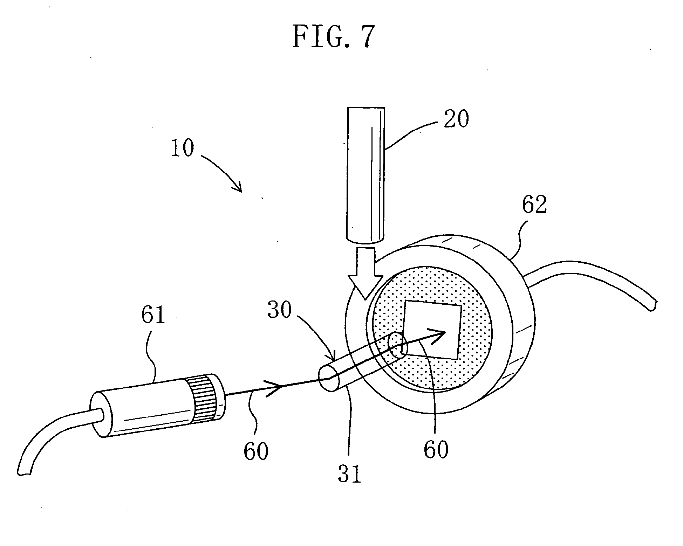

As shown as another embodiment in FIG. 7, the base material (31) of the detection element (30) may be formed of a cylinder to form an optical waveguide. Specifically, the detection element (30) is formed in the shape of a fiber and a mesoporous layer (32) is formed on the periphery of the base material (31). In this embodiment, light (60) emitted from the light emitter (61) propagates through the cylindrical base material (31). According to this embodiment, since the base material (31) is formed of a cylinder, a sufficiently long optical waveguide can be easily formed. The rest of the configuration, the other operations and effects are the same as in the above embodiment.

The base material (31) is not limited to that having the shape of a right cylinder and may be formed in a helical shape to elongate the propagation distance.

Furthermore, the mesoporous layer (32) is not limited to the above embodiments and may employ a material suited for the detection reagent and for the reaction between formaldehyde and the detection reagent. Therefore, the diameter of the mesopores in the mesoporous layer (32) is selected depending on a reaction product between formaldehyde and the detection reagent.

Moreover, the base material (31) may also employ a material suited for a reaction product between formaldehyde and the detection reagent.

In addition, mesoporous layers (32) may be formed on both surfaces of the base material (31). In this case, reflection of light (60) can be effectively used.

Although the above embodiments describe formaldehyde detectors (10), it is a matter of course that the present invention may be composed only of a formaldehyde detector body that is the detection element (30).

The above embodiments are merely preferred embodiments in nature and are not intended to limit the scope, applications and use of the invention.

### INDUSTRIAL APPLICABILITY

As can be seen from the above description, the present invention is useful for formaldehyde detector bodies, formaldehyde detectors, formaldehyde detection methods and formaldehyde detection reagents all of which are used to detect formaldehyde contained in gas.

## Claims

1. A formaldehyde detector body for detecting the formaldehyde concentration based on a change in optical property due to color production resulting from a reaction between formaldehyde and a detection reagent, the formaldehyde detector body comprising:
a base material (31) constituting an optical waveguide in which incident light propagates therethrough while repeating total reflection and then emits therefrom; and
a mesoporous layer (32) formed on at least part of a light-reflecting surface constituting a surface of the base material (31), the mesoporous layer (32) carrying the detection reagent.

2. The formaldehyde -detector body of claim 1, wherein the detection reagent is one selected from the group consisting of 4-aminopent-3-en-2-one, 4-aminooct-3-en-2-one, 5-aminohept-4-en-3-one, 4-amino-4-phenylbut-3-en-2-one, 3-amino-1,3-diphenylprop-2-en-1-one and 2-aminopent-3-en-2-one.

3. The formaldehyde detector body of claim 1, wherein the mesoporous layer (32) is impregnated in its mesopores with the detection reagent.

4. The formaldehyde detector body of claim 1, wherein the mesoporous layer (32) is a layer that transmits light in the optical absorption band of a color produced by the reaction between formaldehyde and the detection reagent.

5. The formaldehyde detector body of claim 1, wherein the mesoporous layer (32) has mesopores of which mean diameter is one-tenth or less than that of a light wavelength in the optical absorption band of a color produced by the reaction between formaldehyde and the detection reagent.

6. The formaldehyde detector body of claim 1, wherein the mesoporous layer (32) is formed with a thickness suited to light in the optical absorption band of a color produced by the reaction between formaldehyde and the detection reagent.

7. The formaldehyde detector body of claim 6, wherein the mesoporous layer (32) has a thickness of 0.01 to 2 µm.

8. The formaldehyde detector body of claim 1, wherein the mesoporous layer (32) is a silica layer.

9. The formaldehyde detector body of claim 1, wherein the mesoporous layer (32) is a mesoporous silica layer having a regularly arranged mesoporous structure synthesized from ethyl orthosilicate by a sol-gel process using a micelle of surfactant or block copolymer as a molecular template.

10. The formaldehyde detector body of claim 1, wherein the base material (31) is a material that transmits light in the optical absorption band of a color produced by the reaction between formaldehyde and the detection reagent.

11. The formaldehyde detector body of claim 1, wherein the base material (31) is formed of a rectangular flat plate.

12. The formaldehyde detector body of claim 1, wherein the base material (31) is formed of a cylinder.

13. The formaldehyde detector body of claim 11, wherein the mesoporous layer (32) is formed on the whole area of a light-reflecting surface constituting one side of the base material (31).

14. The formaldehyde detector body of claim 1, wherein the base material (31) has a thickness of 0.05 to 2 mm.

15. The formaldehyde detector body of claim 1, wherein the base material (31) comprises a glass substrate.

16. The formaldehyde detector body of claim 1, wherein the light entering the base material (31) contains light in the optical absorption band of a color produced by the reaction between formaldehyde and the detection reagent.

17. The formaldehyde detector body of claim 16, wherein the light entering the base material (31) is light of approximately 405-nm wavelength.

18. A formaldehyde detector for detecting the formaldehyde concentration, the formaldehyde detector comprising:
the formaldehyde detector body (30) of any one of claims 1 to 17;
a light emitter (61) for emitting light to the base material (31) of the detector body (30);
a light receiver (62) for receiving light emitted from the base material (31) of the detector body (30); and
a signal processing means (40) for receiving an optical signal from the light receiver (62), detecting a change in optical property due to color production resulting from a reaction between formaldehyde and a detection reagent and determining the formaldehyde concentration based on the change in optical property.

19. The formaldehyde detector of claim 18, wherein the detector body (30) is detachably provided.

20. The formaldehyde detector of claim 18, further comprising a display (50) for displaying the formaldehyde concentration determined by the signal processing means (40).

21. The formaldehyde detector of claim 18, wherein the light emitter (61) is a laser diode or a light-emitting diode.

22. The formaldehyde detector of claim 18, wherein the light receiver (62) is a photodiode.

23. A formaldehyde detection method using: a detector body including a base material (31) constituting an optical waveguide through which light propagates while repeating total reflection; and a mesoporous layer (32) formed on at least part of a light-reflecting surface constituting a surface of the base material (31), the mesoporous layer (32) carrying a detection reagent producing a color by reaction with formaldehyde, the method comprising:
an exposure step of exposing the mesoporous layer (32) to a gas to be measured; and
a signal processing step of allowing light to propagate through the base material (31) after a lapse of a predetermined period of time of the reaction between formaldehyde and the detection reagent, then detecting a change in optical property based on light emitted from the base material (31) and determining the formaldehyde concentration based on the change in optical property.

24. The formaldehyde detection method of claim 23, wherein the detection reagent is one selected from the group consisting of 4-aminopent-3-en-2-one, 4-aminooct-3-en-2-one, 5-aminohept-4-en-3-one, 4-amino-4-phenylbut-3-en-2-one, 3-amino-1,3-diphenylprop-2-en-1-one and 2-aminopent-3-en-2-one.

25. The formaldehyde detection method of claim 23, further comprising a display step of displaying the determined formaldehyde concentration following the signal processing step.

26. A detection reagent for formaldehyde comprising 4-aminooct-3-en-2-one or 5-aminohept-4-en-3-one.
